# EUROPEAN PATENT SPECIFICATION

(11) **EP 3 254 890 B1**
(45) Date of publication and mention of the grant of the patent: **08.05.2019**
(21) Application number: 16179262.7
(22) Date of filing: 13.07.2016
(51) Int. Cl.: B60N 2/62, B60N 2/02

(54) **MANUAL TYPE SEAT CUSHION EXTENSION DEVICE AND VEHICLE SEAT COMPRISING THE SAME**
MANUELLE SITZKISSENVERLÄNGERUNGSVORRICHTUNG UND FAHRZEUGSITZ DAMIT
DISPOSITIF D'EXTENSION DE COUSSIN DE SIÈGE DE TYPE MANUEL ET SIÈGE DE VÉHICULE LE COMPRENANT

(30) Priority: 09.06.2016 KR 20160071418
(43) Date of publication of application: 13.12.2017
(73) Proprietor: Daechang Seat Co., Ltd., Gyeongsangbuk-do 38214 (KR)
(72) Inventor: KIM, Dong Hwa, 44227 Ulsan (KR); LIM, Heon Pil, 44205 Ulsan (KR)
(74) Representative: Cabinet Chaillot

(56) References cited:
- DE-A1-102013 003 867
- KR-B1- 101 559 181

## Description

### Technical Field

The present invention relates to a seat cushion extension device installed in a vehicle seat to enable adjusting a longitudinal position of a front end part of a seat cushion, and more particularly to a seat cushion extension device and a vehicle seat comprising the same where the position adjustment is made by the manual operation.

### Background Art

One of conventional seat cushion extension devices which are operated manually like the present invention is described in a Korean Patent KR101559181B.

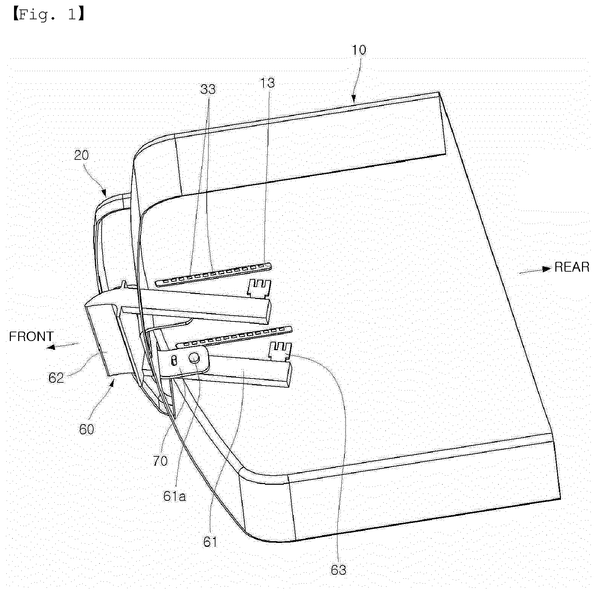

According to said Korean Patent, as shown in Fig. 1, a rod part 61 is rotated by the operation of lifting an operating part 62 so that a lever fork 63 can escape from fork holes 13 to release locking. Therefore, an extension plate 20 can slide back and forth, that is longitudinally, with respect to a cushion base 10. A rotational return of the rod part 61 due to an release of the operation of the operating part 62 makes the lever fork 63 insert into another fork holes 13 at different position to enable locking.

However, according to such invention described in said Korean Patent, the rod part 61 is exposed to a lower side of the cushion base 10 and its radius of rotation is comparably long enough to generate interference problem with other components. Moreover, much force is required to operate the operating part 62 because of much difference in length with the rod part 61.

Another one of the conventional manual type seat cushion extension devices is described in a Korean Patent KR101353959B.

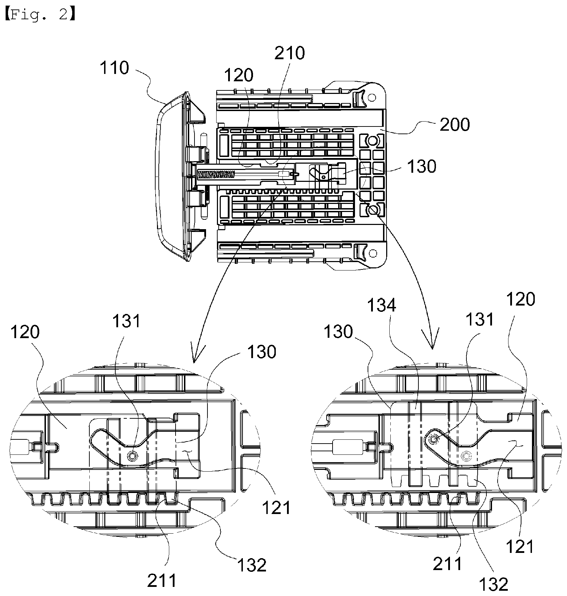

According to this Korean Patent, as shown in Fig. 2, a guide bar 120 slides longitudinally when an operating lever 110 rotates. Then, a locking member 130 slides transversly along a guide grove 121, so that it escapes from a locking state in locking recesses 211 of a base 200.

However, according to such invention described in the Korean Patent, only one lateral side of the locking member 130 is coupled to the locking recesses 211 to make the locking state. Therefore, a comparably weak locking force is exerted on an upper slider and carrier pan (not shown) which slide with respect to the base 200. It is also vulnerable in an aspect of stability in the operation.

Additionally, document DE102013003867A1 discloses a similar manual type seat cushion extension device to that of the KR101353959B.

### Disclosure

### Technical Problem

Accordingly, it is an object of the present invention to provide a manual type seat cushion extension device and a vehicle seat comprising the same which has a stable locking mechanism onto sliding elements.

### Technical Solution

In order to accomplish the above object, the present invention provides a manual type seat cushion extension device comprising: a base plate having therein a receiving part which extends in a longitudinal direction and which is open to an upper side, and the receiving part has at both lateral sides a pair of teeth parts protruding to face each other and extending in the longitudinal direction; an extension bracket overlapped to an upper side of the base plate and supported to slide in the longitudinal direction; a lever coupled to a front end of the extension bracket to rotate up and down with respect to a transverse axis; a rod received in the receiving part to be supported slidably in the longitudinal direction by a lower surface of the extension bracket and adjusted to slide according to the rotation of the lever; and a stopper received in the receiving part and supported by the lower surface of the extension bracket to be elastically moved up and down, having locking teeth at both lateral sides to mate with a pair of the teeth parts, and moving up and down according to the longitudinal slide adjustment of the rod between locking position where the locking teeth mate with a pair of the teeth parts and unlocking position where the locking teeth escape from a pair of the teeth parts.

According to an aspect of the present invention, the rod has a cam surface protruding vertically, the stopper is disposed transversely near to the cam surface, and the stopper has a central cross arm part which has at both lateral sides the locking teeth to be integrally formed, so that the stopper moves up or down from the locking position to the unlocking position as the cross arm part is vertically pressed to move by the cam surface according to the longitudinal slide adjustment of the rod.

According to an aspect of the present invention, the extension bracket has at its lower surface a pair of hanger arms protruding vertically to both lateral sides of the rod, each of the hanger arm has a horizontal extending part at a protruding end, and the stopper is guided to move vertically by slide pins which penetrate the stopper between the cross arm part and the locking teeth at both lateral ends and which are fixed vertically between the horizontal extending part and the lower surface of the extension bracket, and the stopper is pressed to slide to the locking position by coil springs which are inserted around the slide pins to be disposed between the horizontal extending part and the stopper.

According to an aspect of the present invention, the manual type seat cushion extension device further comprises an elastic pressing member provided at a rear end of the lower surface of the extension bracket to press a rear end part of the rod forwardly so that the rod can slide to return; and an elastic pressing member receiving part formed at the rear end of the lower surface of the extension bracket to receive and support the elastic pressing member.

According to an aspect of the present invention, the base plate has a pair of guide grooves extending in the longitudinal direction at both lateral sides of the receiving part, the extension bracket has a pair of slide guides on its lower surface to be inserted into a pair of the guide grooves to slide in the longitudinal direction, a pair of the slide guides have on both lateral surfaces a plurality of protrusions spaced apart therebetween in the longitudinal direction, so that a pair of the slide guides slide in a state where a plurality of the protrusions are contacted and pressed by both lateral inner surfaces of a pair of the guide grooves.

According to an aspect of the present invention, the slide guide has therein openings at an inner side of the protrusions, the protrusions are elastically deformed into the openings if they are contacted and pressed by both lateral inner surfaces of a pair of the guide grooves.

In order to accomplish the above object, the present invention further provides a vehicle seat comprising the above manual type seat cushion extension device.

### Advantageous Effects

According to the manual type seat cushion extension device and vehicle seat comprising the same of the present invention as described above, the receiving part of the base plate has a pair of teeth parts at both lateral sides, and the stopper correspondingly has at both lateral side locking teeth to mate a pair of the teeth parts simultaneously to make locking state, locking force and stability in the locking operation between the extension bracket and the base plate can be significantly enhanced compared to the conventional locking mechanism where the locking is made through only one lateral side.

### Description of Drawings

Fig. 1 is a perspective view of a lower side of a conventional manual type seat cushion extension device;
Fig. 2 is a plan view and partially expanded views of another conventional manual type seat cushion extension device;
Fig. 3 is a perspective view of a manual type seat cushion extension device according to an exemplary embodiment of the present invention;
Fig. 4 is an exploded perspective view of the manual type seat cushion extension device of Fig. 3;
Fig. 5 is a perspective view of a lower side of an extension bracket included in the manual type seat cushion extension device of Fig. 3 and other components coupled thereto;
Fig. 6 is a perspective view of a base plate included in the manual type seat cushion extension device of Fig. 3 and other components interacting therewith;
Fig. 7 shows side views for describing interaction among a lever, a rod and a stopper which are included in the manual type seat cushion extension device of Fig. 3; and
Fig. 8 is a plan view of a slide guide included in the extension bracket of Fig. 5.

### Best Mode

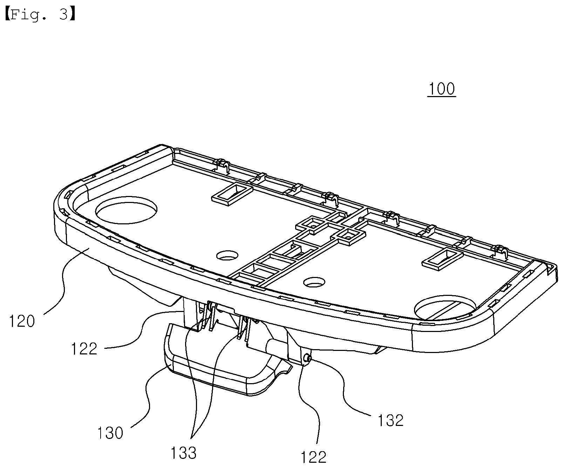

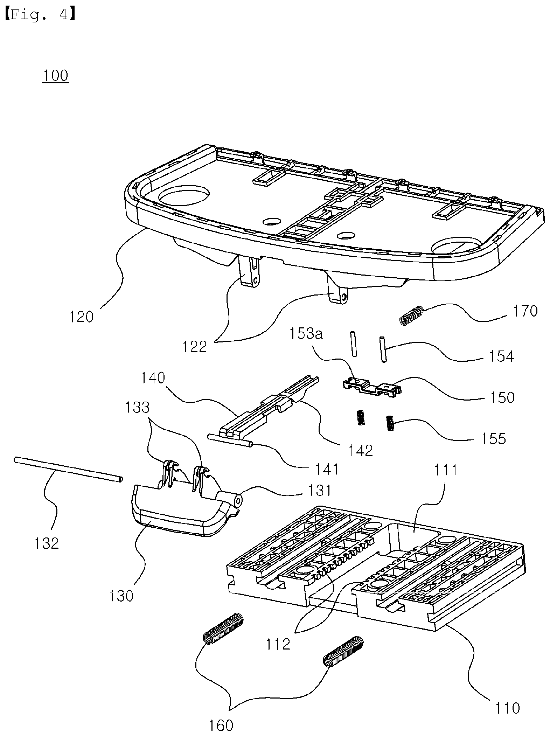

As shown in Fig. 3 and Fig. 4, a manual type seat cushion extension device 100 according to an exemplary embodiment of the present invention comprises a lower base plate 110, an upper extension bracket 120 and means including a lever 130, a rod 140 , a stopper 150 and etc. which are installed to a lower surface of the extension bracket 120 and operated for locking and unlocking of the extension bracket 120 with respect to the base plate 110.

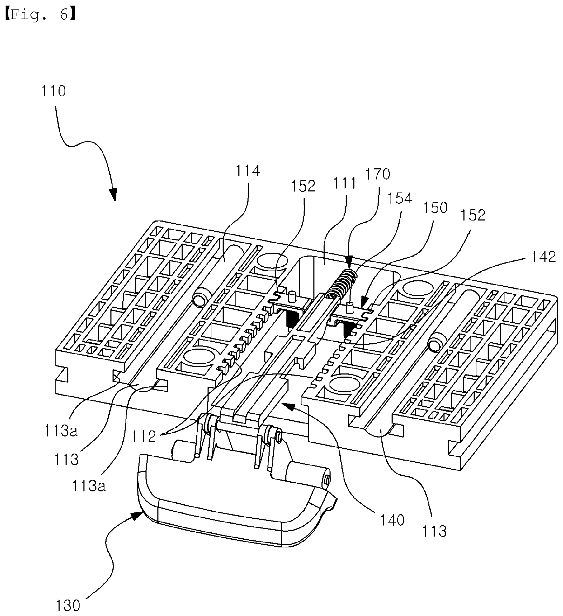

As shown in Fig. 4 and Fig. 6, the base plate 110 has a rectangular receiving part 111 at an inner center area. The receiving part 111 is open to an upper side and extends in a longitudinal direction. A pair of teeth parts 112 are formed at both laterally inner surface of the receiving part 111 to extend in the longitudinal direction to face each other. A pair of guide grooves 113 are formed at both lateral sides from the receiving part 113 to extend in the longitudinal direction.

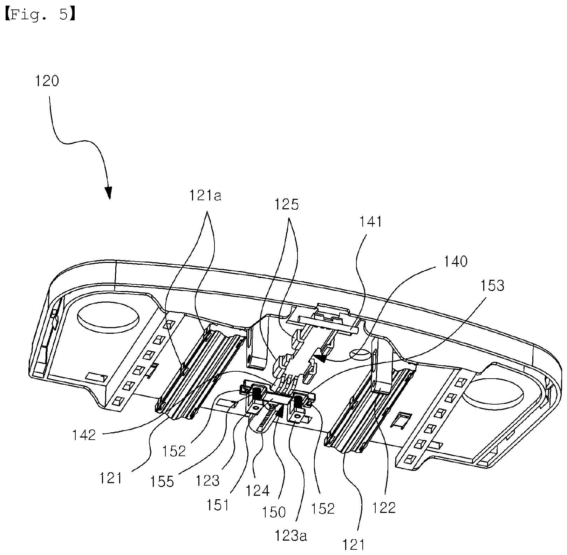

To correspond to a pair of the guide grooves 113 , as shown in Fig. 4 and Fig. 5, a pair of slide guides 121 are formed to protrude from the lower surface of the extension bracket 120. These slide guides 121 are inserted into the guide gooves 113 respectively and supported therein to be slidable longitudinally. That is, the upper extension bracket 120 is overlapped on the lower base plate 110 to be supported to slide in the longitudinal direction.

As shown in Fig. 6, a spring supporting bar 114 is formed at an inner rear end side of the guide groove 113 so that a spring (refer to 160 in Fig. 4) can be inserted through it. Therefore, the slide guide 121 is elastically pressed to the front by the spring 160.

As shown in Fig. 3 and Fig. 4, the lever 130 has at its rear and lower end side a shaft receiving part 131 so that it can rotate up and down with respect to a shaft 132 which is inserted into the shaft receiving part 131. The shaft 132 is acting as a tansverse axis by also being inserted into lower end parts of arms 122 that protrude vertically from a front end lower surface of the extension bracket 120 with a predetermined interval therebetween.

As shown in Fig. 4 and Fig. 5, the rod 140 is disposed at a lower side of the extension braket 120 and received within the receiving part 111 to be supported to slide longitudinally by a number of holder arms 125 which are formed to protrude on a lower center surface of the extension bracket 120.

A cross arm part 141 extends transversly at the front end of the rod 140. It is held by arm holder parts 133 which are formed at rear upper end side of the lever 130. Therefore, referring to Fig. 3 and Fig. 5, if the lever 130 rotates up and down with respect to the shaft 132, the rod 140 slides to the rear or to the front.

A trapezoidal cam surface 142 is formed on a lower surface along the longitudinal direction to protrude vertically.

As shown in Fig. 4 and Fig. 5, the stopper 150 has a cross arm part 151 protruding downwardly at a center part and a pair of locking teeth 152 extending integrally from both lateral ends of the cross arm part 151.

As shown in Fig. 5, the stopper 150 is disposed at a lower side of the rod 140 in a transvers direction and near to the cam surface 142. The stopper 150 is supported by horizontal extending parts 123a which form lower end parts of a pair of hanger arms 123 that protrude vertically from the extension bracket 120 at both lateral sides of the rod 140.

In detail, the stopper 150 has a vertical through hole 153a (refer to Fig. 4) in a connecting arm part 153 which connects the central cross arm part 151 with the locking teeth 152 at each lateral end side. A slide pin 154 is inserted into the vertical through hole 153a to guide the stopper 150 to slide vertically between the horizontal extending part 123a and the lower surface of the extension bracket 120.

A coil spring 155 is inserted around the slide pin 154 to be disposed between the horizontal extending part 123a and the connecting arm part 153, so that the stopper 150 is elastically pressed to slide upwardly by the coil spring 155.

The stopper 150 installed as described above is received in the receiving part 111 of the base plate 110 as shown in Fig. 6.

In Fig. 6, the stopper 150 is at a locking position where both lateral locking teeth 152 mate with teeth part 112 of the receiving part 111. Therefore, the position of the upper extension bracket 120 which is coupled to the stopper 150 via the slide pins 154 is locked in the longitudinal direction.

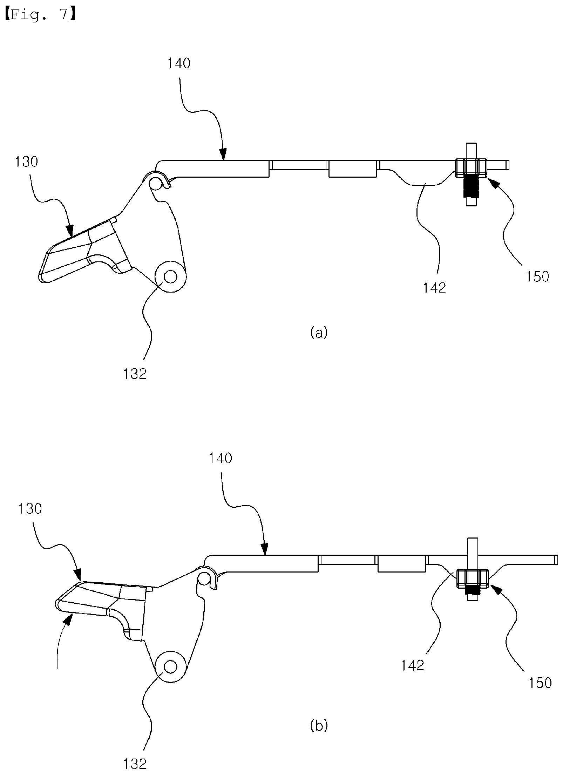

From this state, if the lever 130 is rotated upwardly, the rod 140 rotatably coupled to the lever 130 slides backwardly and the cam surface 142 presses the stopper 150 to move downwardly (from (a) to (b) in Fig. 7).

The stopper 150 pressed by the cam surface 142 moves downwardly to an unlocking position where the locking teeth 152 completely escape downwardly from the teeth part 112.

At the unlocking position of the stopper 150, the extension bracket 120 can freely slide back and forth with respect to the base plate 110.

If a user release its operating force from the lever 130 in Fig. 7 (b), the rod 140 moves forwardly (to the left) and the lever 130 rotates to return to its position of Fig. 7 (a).

To this end, as shown in Fig. 6, an elastic pressing member, that is a spring 170, is provided at a rear end side of the rod 140. The spring 170, as shown in Fig. 5, is received and supported within an elastic pressing member receiving part 124 which is formed to protrude on the lower rear end surface of the extension bracket 120.

Referring to Fig. 5, a pair of the slide guides 121 which are formed on the lower surface of the extension bracket 120 have on both lateral surfaces a plurality of protrusions 121a spaced therebetween in the longitudinal direction.

Accordingly, a pair of the slide guides 121 slide in the longitudinal direction in a state where the protrusions 121a contact both lateral inner surfaces 113a (refer to Fig. 6) of a pair of the guide grooves 113, so that contact friction and noise generation can be minimized.

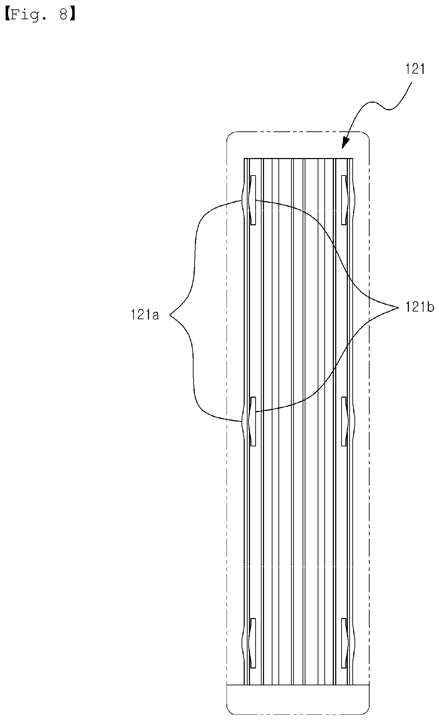

In this case, to prevent a tight contact or tight slide problem, as shown in Fig. 8, the slide guide 121 has an opening 121b therein at an inner side of each protrusion 121a so that the protrusion 121a can be elastically deformed into the opening 121b when it receives contacting force from the inner surface 113 of the guide groove 113. Therefore, an excessive contact friction or the thight slide due to the protrusion 121a can be prevented.

Although the manual type seat cushion extension device 100 has been disclosed, various modifications, additions and substitutions are possible, without departing from the scope of the invention, as long as they fall within the scope defined by the claims.

## Claims

1. A manual type seat cushion extension device (100) comprising:
a base plate (110) having therein a receiving part (111) which extends in a longitudinal direction and which is open to an upper side, and the receiving part has at both lateral sides a pair of teeth parts (112) protruding to face each other and extending in the longitudinal direction;
an extension bracket (120) overlapped to an upper side of the base plate (110) and supported to slide in the longitudinal direction;
a lever (130) coupled to a front end of the extension bracket (120) to rotate up and down with respect to a transverse axis;
a rod (140) received in the receiving part (111) to be supported slidably in the longitudinal direction by a lower surface of the extension bracket (120) and adjusted to slide according to the rotation of the lever; and
a stopper (150) received in the receiving part (111) and supported by the lower surface of the extension bracket (120) to be elastically moved up and down, having locking teeth (152) at both lateral sides to mate with a pair of the teeth parts (112), and moving up and down according to the longitudinal slide adjustment of the rod (140) between locking position where the locking teeth (152) mate with a pair of the teeth parts (112) and unlocking position where the locking teeth escape from a pair of the teeth parts.

2. The manual type seat cushion extension device (100) according to claim 1, wherein the rod (140) has a cam surface (142) protruding vertically, the stopper (150) is disposed transversely near to the cam surface, and the stopper has a central cross arm part (151) which has at both lateral sides the locking teeth (152) to be integrally formed, so that the stopper moves up or down from the locking position to the unlocking position as the cross arm part (151) is vertically pressed to move by the cam surface (142) according to the longitudinal slide adjustment of the rod.

3. The manual type seat cushion extension device (100) according to claim 2, wherein the extension bracket (130) has at its lower surface a pair of hanger arms protruding vertically to both lateral sides of the rod, each of the hanger arm has a horizontal extending part at a protruding end, and the stopper (150) is guided to move vertically by slide pins (154) which penetrate the stopper between the cross arm part (151) and the locking teeth (152) at both lateral ends and which are fixed vertically between the horizontal extending part and the lower surface of the extension bracket, and the stopper is pressed to slide to the locking position by coil springs (155) which are inserted around the slide pins (154) to be disposed between the horizontal extending part and the stopper.

4. The manual type seat cushion extension device (100) according to claim 2 or claim 3 further comprising:
an elastic pressing member (170) provided at a rear end of the lower surface of the extension bracket to press a rear end part of the rod (140) forwardly so that the rod can slide to return; and
an elastic pressing member receiving part (124) formed at the rear end of the lower surface of the extension bracket to receive and support the elastic pressing member (170).

5. The manual type seat cushion extension device (100) according to claim 1, wherein the base plate (110) has a pair of guide grooves (113) extending in the longitudinal direction at both lateral sides of the receiving part, (111) the extension bracket (120) has a pair of slide guides (121) on its lower surface to be inserted into a pair of the guide grooves (113) to slide in the longitudinal direction, a pair of the slide guides (121) have on both lateral surfaces a plurality of protrusions (121a) spaced apart therebetween in the longitudinal direction, so that a pair of the slide guides slide in a state where a plurality of the protrusions are contacted and pressed by both lateral inner surfaces of a pair of the guide grooves.

6. The manual type seat cushion extension device (100) according to claim 5, wherein the slide guide has therein openings at an inner side of the protrusions,
the protrusions are elastically deformed into the openings if they are contacted and pressed by both lateral inner surfaces of a pair of the guide grooves.

7. A vehicle seat comprising the manual type seat cushion extension device according to one of claim 1, claim 2, claim 3, claim 5 and claim 6.

## Patentansprüche

1. Manuelle Sitzpolster-Ausfahrvorrichtung (100), Folgendes umfassend:
eine Grundplatte (110), die in sich einen aufnehmenden Teil (111) aufweist, der sich in einer Längsrichtung erstreckt und der zu einer oberen Seite hin offen ist, und wobei der aufnehmende Teil an beiden lateralen Seiten ein Paar aus gezahnten Teilen (112) aufweist, die einander zugewandt hervorstehen und sich in Längsrichtung erstrecken,
eine Ausfahrhalterung (120), die zu einer oberen Seite der Grundplatte (110) überlappt und für ein Gleiten in der Längsrichtung abgestützt wird,
einen Hebel (130), der an ein vorderes Ende der Ausfahrhalterung (120) gekoppelt ist, um sich im Verhältnis zu einer Querachse auf und ab zu drehen,
eine Stange (140), die in den aufnehmenden Teil (111) aufgenommen ist, um durch eine untere Fläche der Ausfahrhalterung (120) gleitfähig in Längsrichtung gestützt zu werden, und für das Gleiten gemäß der Drehung des Hebels justiert ist, und
einen Stopper (150), der in dem aufnehmenden Teil (111) aufgenommen ist und durch die untere Fläche der Ausfahrhalterung (120) gestützt wird, um elastisch auf und ab bewegt zu werden, der an beiden lateralen Seiten arretierende Zähne (152) aufweist, die mit einem Paar aus den gezahnten Teilen (112) zusammenpassen und sich gemäß der Justierung des Gleitens der Stange (140) in Längsrichtung zwischen einer Arretierungsposition, in der die arretierenden Zähne (152) mit einem Paar aus den gezahnten Teilen (112) ineinandergreifen, und einer Löseposition, in der die arretierenden Zähne aus einem Paar aus den gezahnten Teile heraustreten, auf und ab bewegen.

2. Manuelle Sitzpolster-Ausfahrvorrichtung (100) nach Anspruch 1, wobei die Stange (140) eine Nockenfläche (142) aufweist, die vertikal hervorsteht, wobei der Stopper (150) nahe der Nockenfläche quer angeordnet ist und der Stopper einen mittleren Querarmteil (151) aufweist, der an beiden lateralen Seiten die arretierenden Zähne (152) aufweist, die integral gebildet sind, so dass sich der Stopper von der Arretierungsposition in die Löseposition auf und ab bewegt, wenn der Querarmteil (151) vertikal gedrückt wird, um sich durch die Nockenfläche (142) gemäß der Justierung des Gleitens der Stange in Längsrichtung zu bewegen.

3. Manuelle Sitzpolster-Ausfahrvorrichtung (100) nach Anspruch 2, wobei die Ausfahrhalterung (130) an ihrer unteren Fläche ein Paar Aufhängerarme aufweist, die an beiden lateralen Seiten der Stange vertikal hervorstehen, wobei jeder der Aufhängerarme an einem hervorstehenden Ende einen sich horizontal erstreckenden Teil aufweist, und der Stopper (150) durch Gleitstifte (154) geführt wird, um sich vertikal zu bewegen, wobei die Gleitstifte den Stopper zwischen dem Querarmteil (151) und den arretierenden Zähnen (152) an beiden seitlichen Enden durchdringen und vertikal zwischen dem sich horizontal erstreckenden Teil und der unteren Fläche der Ausfahrhalterung befestigt sind und der Stopper durch Spiralfedern (155) gedrückt wird, um in die Arretierungsposition zu gleiten, wobei die Spiralfedern um die Gleitstifte (154) herum eingesetzt sind, um zwischen dem sich horizontal erstreckenden Teil und dem Stopper angeordnet zu sein.

4. Manuelle Sitzpolster-Ausfahrvorrichtung (100) nach Anspruch 2 oder Anspruch 3, ferner Folgendes umfassend:
ein elastisches Drückelement (170), das an einem hinteren Ende der unteren Fläche der Ausfahrhalterung bereitgestellt ist, um einen hinteren Endteil der Stange (140) nach vorn zu drücken, so dass die Stange zurückgleiten kann, und
ein elastisches Drückelement-Aufnahmeteil (124), das an dem hinteren Ende der unteren Fläche der Ausfahrhalterung gebildet ist, um das elastische Drückelement (170) aufzunehmen und abzustützen.

5. Manuelle Sitzpolster-Ausfahrvorrichtung (100) nach Anspruch 1, wobei die Grundplatte (110) ein Paar Führungsrillen (113) aufweist, die sich an beiden lateralen Seiten des aufnehmenden Teils (111) in der Längsrichtung erstrecken, wobei die Ausfahrhalterung (120) an ihrer unteren Fläche ein Paar Gleitführungen (121) aufweist, die für ein Gleiten in Längsrichtung in ein Paar der Führungsrillen (113) einzusetzen sind, wobei ein Paar der Gleitführungen (121) an beiden seitlichen Flächen mehrere Vorsprünge (121a) aufweist, die in der Längsrichtung voneinander beabstandet sind, so dass ein Paar der Gleitführungen in einem Zustand gleitet, in dem mehrere der Vorsprünge durch beide seitliche Innenflächen eines Paares der Führungsrillen kontaktiert und gedrückt werden.

6. Manuelle Sitzpolster-Ausfahrvorrichtung (100) nach Anspruch 5, wobei die Gleitführung in sich an einer Innenseite der Vorsprünge Öffnungen aufweist, wobei der Vorsprünge in die Öffnungen elastisch verformt werden, wenn sie durch beide seitlichen Innenflächen eines Paares der Führungsrillen kontaktiert und gedrückt werden.

7. Fahrzeugsitz, die manuelle Sitzpolster-Ausfahrvorrichtung nach einem von Anspruch 1, Anspruch 2, Anspruch 3, Anspruch 5 und Anspruch 6 umfassend.

## Revendications

1. Dispositif d'extension de coussin de siège de type manuel (100) comprenant :
une plaque de base (110) ayant, à l'intérieur de celle-ci, une partie de réception (111) qui s'étend dans une direction longitudinale et qui est ouverte sur un côté supérieur, et la partie de réception ayant, sur les deux côtés latéraux, une paire de parties à dents (112) faisant saillie pour se faire face l'une l'autre et s'étendant dans la direction longitudinale ;
un support d'extension (120) superposé sur un côté supérieur de la plaque de base (110) et supporté pour coulisser dans la direction longitudinale ;
un levier (130) couplé à une extrémité avant du support d'extension (120) pour tourner vers le haut et vers le bas par rapport à un axe transversal ;
une tige (140) reçue dans la partie de réception (111) pour être supportée de manière coulissante dans la direction longitudinale par une surface inférieure du support d'extension (120) et ajustée pour coulisser en fonction de la rotation du levier ; et
une butée (150) reçue dans la partie de réception (111) et supportée par la surface inférieure du support d'extension (120) pour être déplacée élastiquement vers le haut et vers le bas, ayant des dents de verrouillage (152) sur les deux côtés latéraux pour s'accoupler à une paire des parties à dents (112), et se déplaçant vers le haut et vers le bas en fonction de l'ajustement de coulissement longitudinal de la tige (140) entre une position de verrouillage, dans laquelle les dents de verrouillage (152) s'accouplent à une paire de parties à dents (112), et une position de déverrouillage, dans laquelle les dents de verrouillage se séparent d'une paire de parties à dents.

2. Dispositif d'extension de coussin de siège de type manuel (100) selon la revendication 1, dans lequel la tige (140) a une surface de came (142) faisant saillie verticalement, la butée (150) est disposée transversalement à proximité de la surface de came, et la butée a une partie de traverse centrale (151) qui a, sur les deux côtés latéraux, les dents de verrouillage (152) pour être former d'un seul tenant, de telle sorte que la butée se déplace vers le haut ou vers le bas de la position de verrouillage à la position de déverrouillage à mesure que la partie de traverse centrale (151) est pressée verticalement pour se déplacer par la surface de came (142) en fonction de l'ajustement de coulissement longitudinal de la tige.

3. Dispositif d'extension de coussin de siège de type manuel (100) selon la revendication 2, dans lequel le support d'extension (130) a, à sa surface inférieure, une paire de bras de suspension faisant saillie verticalement vers les deux côtés latéraux de la tige, chacun des bras de suspension a une partie d'extension horizontale à une extrémité en saillie, et la butée (150) est guidée pour se déplacer verticalement par des broches de coulissement (154) qui pénètrent dans la butée entre la partie de traverse (151) et les dents de verrouillage (152) sur les deux extrémités latérales et qui sont fixées verticalement entre la partie d'extension horizontale et la surface inférieure du support d'extension, et la butée est pressée pour coulisser vers la position de verrouillage par des ressorts hélicoïdaux (155) qui sont introduits autour des broches de coulissement (154) pour être disposés entre la partie d'extension horizontale et la butée.

4. Dispositif d'extension de coussin de siège de type manuel (100) selon la revendication 2 ou la revendication 3, comprenant en outre :
un élément de pression élastique (170) prévu à une extrémité arrière de la surface inférieure du support d'extension pour presser une partie d'extrémité arrière de la tige (140) vers l'avant, de telle sorte que la tige peut coulisser pour revenir ; et
une partie de réception d'élément de pression élastique (124) formée à l'extrémité arrière de la surface inférieure du support d'extension pour recevoir et supporter l'élément de pression élastique (170).

5. Dispositif d'extension de coussin de siège de type manuel (100) selon la revendication 1, dans lequel la plaque de base (110) a une paire de rainures de guidage (113) s'étendant dans la direction longitudinale sur les deux côtés latéraux de la partie de réception (111), le support d'extension (120) a une paire de guides de coulissement (121), sur sa surface inférieure, devant être introduits dans une paire de rainures de guidage (113) pour coulisser dans la direction longitudinale, une paire des guides de coulissement (121) a, sur les deux surfaces latérales, une pluralité de saillies (121a) espacées entre elles dans la direction longitudinale, de telle sorte qu'une paire des guides de coulissement coulisse dans un état dans lequel une pluralité de saillies sont en contact et pressées par les deux surfaces internes latérales d'une paire des rainures de guidage.

6. Dispositif d'extension de coussin de siège de type manuel (100) selon la revendication 5, dans lequel le guide de coulissement a, à l'intérieur de celui-ci, des ouvertures sur un côté interne des saillies,
les saillies sont déformées élastiquement dans les ouvertures si elles sont en contact et pressées par les deux surfaces internes latérales d'une paire des rainures de guidage.

7. Siège de véhicule comprenant le dispositif d'extension de coussin de siège de type manuel selon l'une des revendications 1, 2, 3, 5 et 6.
